# FASCICULE DE BREVET EUROPEEN

(11) **EP 2 336 587 B1**
(45) Date de publication et mention de la délivrance du brevet: **23.01.2013**
(21) Numéro de dépôt: 10191688.0
(22) Date de dépôt: 18.11.2010
(51) Int. Cl.: F16D 23/12

(54) **Dispositif d'actionnement à came pour un système d'embrayage à friction**
Bestätigungsanordnung mit Keil für eine Reibungskupplung
Wedge actuator for a friction clutch

(30) Priorité: 21.12.2009 FR 0959303
(43) Date de publication de la demande: 22.06.2011
(73) Titulaire: Valeo Embrayages, 80009 Amiens Cedex 2 (FR)
(72) Inventeur: Lebas, Gilles, 80480 Villers Bretonneux (FR); Maurel, Hervé, 80000 Amiens (FR); Laforge, Thibaut, 02600 Retheuil (FR); Delevallee, Jean-Louis, 80090 Amiens (FR)

(56) Documents cités:
- EP-A1- 1 845 275
- DE-A1-102004 037 711
- DE-A1-102008 016 783
- DE-C- 882 929
- US-A1- 2001 008 199
- US-A1- 2009 294 238

## Description

L'invention concerne un dispositif d'actionnement pour un embrayage à friction, notamment de véhicule automobile.

L'invention concerne plus particulièrement un dispositif d'actionnement pour un système d'embrayage à friction, notamment de véhicule automobile, qui comporte :
- une butée d'actionnement qui est montée coulissante longitudinalement entre une position extrême avant d'actionnement du système d'embrayage et une position extrême arrière de repos du système d'embrayage vers laquelle elle est rappelée élastiquement, ladite butée d'actionnement étant formée par un palier à roulement;
- un levier de commande qui est monté pivotant, par l'intermédiaire d'une articulation fixe, autour d'un axe transversal de pivotement, le levier de commande comportant :
   -- un premier bras de levier de longueur fixe qui s'étend globalement verticalement depuis l'axe de pivotement jusqu'à un point de poussée de la butée d'actionnement ;
   -- un deuxième bras de levier de longueur fixe qui s'étend depuis l'axe de pivotement jusqu'à un point de sollicitation qui est décalé verticalement par rapport au point de poussée ;
- un actionneur qui est apte à appliquer un effort d'actionnement sur le point de sollicitation du levier de commande pour faire pivoter le levier de commande et ainsi commander le coulissement de la butée d'actionnement vers sa position extrême avant d'actionnement. Un tel dispositif est connu du document DE 10 2004 037 711 A1.

Les embrayages à friction comportent généralement un plateau de pression qui est destiné à être serré longitudinalement contre un plateau de réaction avec interposition d'un disque de friction afin d'accoupler un arbre mené avec un arbre menant, l'embrayage étant alors dans un état embrayé.

Lorsque le plateau de pression est écarté du plateau de réaction, le disque de friction n'est plus en contact avec aucun des plateaux. L'arbre mené est découplé de l'arbre menant, l'embrayage étant alors dans un état débrayé.

De tels embrayages peuvent être du type dit "normalement fermé" ou du type dit "normalement ouvert.

Dans le cas des embrayages du type "normalement fermé", le plateau de pression est rappelé élastiquement vers une position de serrage contre le plateau de réaction de manière que le système d'embrayage soit dans un état embrayé. La butée d'actionnement est alors dans sa position extrême arrière de repos. Pour commander le système d'embrayage vers son état débrayé, il est nécessaire de faire coulisser la butée d'actionnement longitudinalement vers l'avant jusqu'à une position extrême avant d'actionnement à l'encontre de l'effort de rappel élastique du plateau de réaction.

A l'inverse, dans le cas des systèmes d'embrayage du type "normalement ouvert", le plateau de pression est rappelé élastiquement vers une position écartée du plateau de réaction de manière que le système d'embrayage soit dans un état débrayé. La butée d'actionnement est alors dans sa position arrière de repos. Pour commander le système d'embrayage vers son état embrayé, il est nécessaire de faire coulisser la butée d'actionnement longitudinalement vers l'avant jusqu'à une position d'actionnement à l'encontre de l'effort de rappel élastique du plateau de réaction.

Dans la suite de la description et dans les revendications, on comprendra donc que la position d'actionnement de la butée d'actionnement peut, selon le cas, correspondre à un état débrayé pour un système d'embrayage du type "normalement fermé" ou à un état embrayé pour un système d'embrayage du type "normalement ouvert".

Le levier de commande est généralement sollicité par l'extrémité libre d'une tige de poussée qui s'étend dans une direction globalement orthogonale au bras de levier.

Cependant, l'espace alloué par les constructeurs automobiles pour le montage d'un système d'embrayage présente parfois des dimensions ou des formes qui ne sont pas compatibles avec les dispositifs d'actionnement connus.

L'invention propose donc un dispositif d'actionnement du type décrit précédemment qui présente notamment l'avantage d'être peu encombrant, notamment selon une orientation longitudinale. Le dispositif d'actionnement selon l'invention est caractérisé en ce que l'actionneur comporte une came mobile présentant un chemin de came qui est agencé en contact glissant avec le point de sollicitation du levier de commande, le déplacement de la came entraînant l'application de l'effort d'actionnement sur le point de sollicitation formant suiveur de came.

Selon d'autres caractéristiques de l'invention :
- la came est formée par un coin qui est monté mobile le long d'une course d'actionnement qui s'étend dans un plan transversal fixe, ledit plan transversal étant globalement parallèle au deuxième bras de levier, le coin étant monté coulissant :
   -- une position de repos correspondant à la position de repos de la butée d'actionnement ; et
   -- une position d'actionnement correspondant à la position d'actionnement de la butée d'actionnement ;
- la course d'actionnement du coin s'étend parallèlement au deuxième bras de levier ;
- le dispositif d'actionnement comporte un fond parallèle à la course d'actionnement du coin, le coin prenant appui sur le fond perpendiculairement par rapport à la direction de sa course d'actionnement et à l'encontre d'une partie de la force de rappel de la butée d'actionnement répercutée par le levier de commande ;
- l'actionneur comporte une tige de poussée d'axe parallèle à la course d'actionnement du coin, la tige étant montée coulissante axialement pour pousser le coin vers sa position d'actionnement ;
- le chemin de came présente une pente rectiligne ;
- le chemin de came présente des courbures ;
- le coin est monté tournant autour d'un axe de rotation qui est orthogonal au deuxième bras de levier et qui est orthogonal à l'axe de pivotement ;
- le point de sollicitation est formé par un galet de roulement qui roule sur le chemin de came lors du déplacement de la came mobile ;
- articulation du levier de commande est une liaison rotule qui autorise un pivotement en roulis du levier de commande autour de l'axe principal du deuxième bras de levier, le galet de roulement et/ou le chemin de came présentant profil bombé apte à autoriser le roulement transversal du galet de roulement sur le chemin de came pour accompagner le pivotement en roulis du levier de commande.

D'autres caractéristiques et avantages apparaîtront à la lecture de la description détaillée qui va suivre pour la compréhension de laquelle on se reportera aux dessins annexés parmi lesquels :
Dans la suite de la description et dans les revendications, on adoptera à titre non limitatif des directions longitudinale, orientée d'arrière en avant, verticale, orientée de bas en haut, et transversale, orientée de gauche à droite indiquées par le trièdre "L,V,T" des figures. La direction longitudinale est choisie comme étant parallèle à l'axe de rotation "A" du système d'embrayage.

Dans la description qui va suivre, des numéros de référence identiques désignent des pièces identiques ou ayant des fonctions similaires.

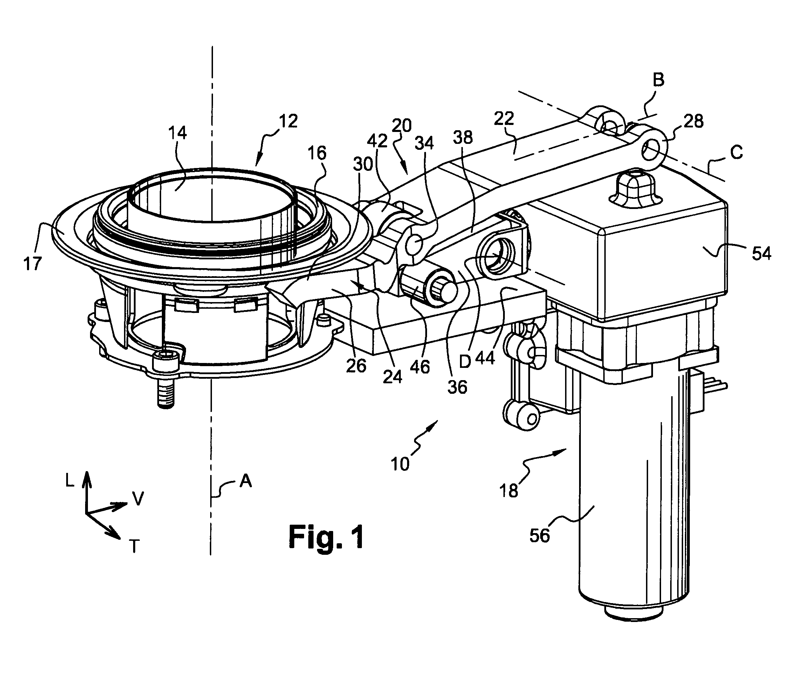

On a représenté à la figure 1 un dispositif d'actionnement 10 d'un système d'embrayage à friction (non représenté) de véhicule automobile qui est destiné à accoupler un arbre moteur avec au moins un arbre mené. L'arbre moteur et l'arbre mené sont rotatifs autour d'un même axe de rotation "A". Classiquement, l'arbre mené est relié à une boîte de vitesses arrière (non représentée).

De manière connue, le système d'embrayage comporte aussi un diaphragme annulaire coaxial arrière d'actionnement d'un plateau de pression. Le diaphragme comporte traditionnellement un anneau radialement extérieur depuis lequel des rayons élastiques s'étendent radialement vers l'axe de rotation "A" jusqu'à une extrémité intérieure libre.

Les rayons du diaphragme sont flexibles élastiquement. Le diaphragme est par exemple réalisé en un acier présentant des propriétés d'élasticité adaptées.

Le système d'embrayage est destiné à être commandé par un dispositif d'actionnement 10 qui est représenté à la figure 1.

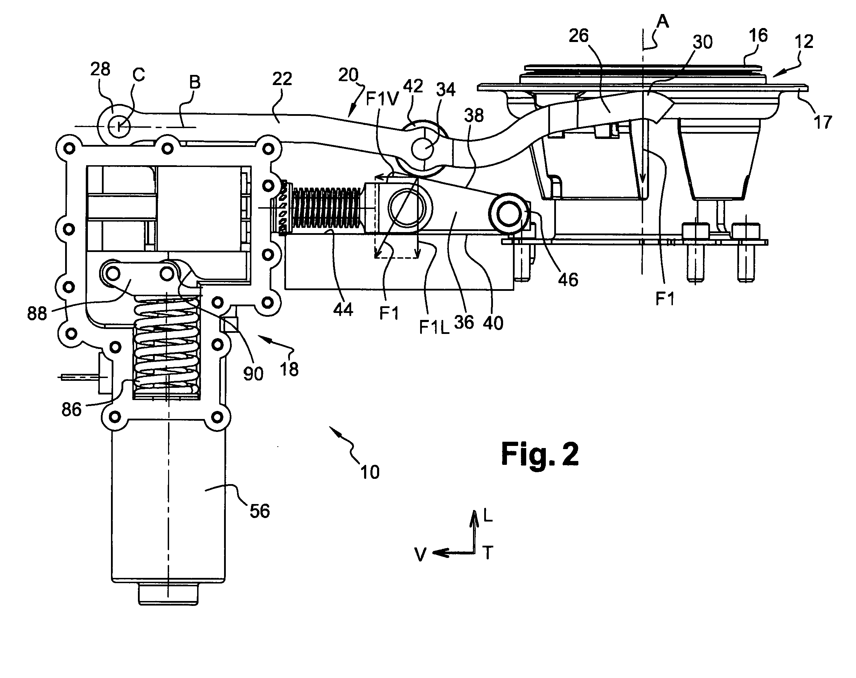

Le dispositif d'actionnement 10 comporte une butée annulaire d'actionnement 12 du système d'embrayage qui est montée coulissante longitudinalement par rapport au diaphragme sur une course d'embrayage qui est délimitée par une position extrême avant d'actionnement dans laquelle elle sollicite axialement vers l'avant l'extrémité intérieure libre des rayons du diaphragme, et une position extrême arrière de repos vers laquelle la butée d'actionnement 12 est rappelée élastiquement par les rayons du diaphragme. Comme représenté à la figure 2, le diaphragme est ainsi susceptible d'exercer sur la butée d'actionnement 12 un effort de rappel élastique "F1" orienté longitudinalement vers l'arrière.

La butée d'actionnement 12 est ici formée par un palier à roulement qui est monté coulissant autour d'un tube 14 fixe de guidage d'axe longitudinal "A". La butée d'actionnement 12 comporte une première bague portant une face 16 avant de sollicitation du diaphragme, et une deuxième bague portant une collerette 17 radialement extérieure. Une telle butée d'actionnement 12 est bien connue et ne sera pas décrite plus en détail.

Le dispositif d'actionnement 10 comporte aussi un actionneur 18 qui est destiné à commander le coulissement de la butée d'actionnement 12 par l'intermédiaire d'un levier de commande 20 rigide.

Le levier de commande 20 s'étend selon un axe "B" principal globalement vertical. Il comporte un premier tronçon 22 d'extrémité supérieure formant une barre. Le levier de commande 20 comporte aussi un deuxième tronçon 24 d'extrémité inférieure divisé en deux branches 26 formant une fourche en forme de "U" ouvert verticalement vers le bas. Du fait de cette forme particulière, un tel levier de commande 20 est couramment désigné par le terme "fourchette".

L'extrémité supérieure 28 du levier de commande 20 est montée articulée sur un élément (non représenté) fixe par rapport au carter de boîte de vitesses du véhicule automobile. Le levier de commande 20 est notamment monté articulé de manière pivotante autour d'un axe transversal de pivotement "C" par l'intermédiaire d'une articulation (non représentée).

Ladite articulation est avantageusement une liaison rotule qui permet aussi un débattement angulaire du levier de commande 20 autour de son axe principal "B". Le levier de commande 20 est ainsi susceptible de pivoter "en roulis" autour de son axe principal "B" pour compenser les tolérances et les jeux de montage de la butée d'actionnement 12 et du diaphragme.

Comme cela est visible à la figure 2, le levier de commande 20 est monté de manière que les branches 26 de la fourche 24 embrassent transversalement la butée d'actionnement 12 longitudinalement en arrière de la collerette 17. Ainsi, l'extrémité inférieure libre de chaque branche 26 est agencée en vis-à-vis de la face arrière de la collerette 17. Les deux extrémités inférieures libres des branches 26 sont plus particulièrement agencées de manière diamétralement opposée par rapport à l'axe "A" de rotation du système d'embrayage. Les extrémités libres forment ainsi un point de poussée 30 de la butée d'actionnement 12 par l'intermédiaire de la collerette 17.

L'actionneur 18 est susceptible d'exercer un effort d'actionnement orthogonal au deuxième bras de levier, ici un effort longitudinal, en un point de sollicitation 34 du levier de commande 20 pour provoquer le pivotement du levier de commande 20 autour de son axe de pivotement "C" de manière à pousser la butée d'actionnement 12 longitudinalement vers l'avant par effet de levier à l'encontre de l'effort de rappel élastique "F1 ".

Le point de sollicitation 34 occupe une position fixe sur le levier de commande 20 et il est décalé verticalement par rapport au point de poussée 30. Le point de sollicitation 34 est ici agencé entre l'axe de pivotement "C" et le point de poussée 30 du levier de commande 20. Le levier de commande 20 forme un ainsi un levier dit "du troisième genre".

Dans cette configuration, le levier de commande 20 présente deux bras de leviers. Un premier bras de levier de longueur fixe est défini comme étant une droite qui relie l'axe de pivotement "C" avec l'extrémité inférieure libre 30 des branches 26. Le deuxième bras de levier de longueur fixe est défini comme étant une droite qui relie l'axe de pivotement "C" jusqu'au point de sollicitation 34.

Le point de sollicitation 34 est ici globalement aligné verticalement avec l'axe de pivotement "C" et le point de poussée 30. Les deux bras de levier s'étendent ainsi dans un même plan longitudinal vertical.

Selon une variante non représentée de l'invention, le levier de commande peut aussi être un levier du premier genre, dans lequel l'articulation est interposée entre le point de poussée et le point de sollicitation. Le levier de commande peut aussi être un levier du deuxième genre, dans lequel le point de poussée est interposé entre l'articulation et le point de sollicitation.

Dans le mode de réalisation représenté aux figures, le levier de commande 20 s'étend le long d'un axe principal "B" globalement rectiligne.

En variante, le levier de commande 20 présente une forme coudée ou courbée dans un plan vertical longitudinal. Dans ce cas, le premier bras de levier peut former un angle avec le deuxième bras de levier.

L'actionneur 18 comporte une came 36 mobile dont le chemin de came 38 est agencé en contact glissant avec le point de sollicitation 34 du levier de commande 20, le point de sollicitation 34 formant suiveur de came.

Par le terme " glissant", on comprendra que le contact peut être réalisé soit par frottement, soit par roulement du point de sollicitation 34 sur le chemin de came 38 de la came 36.

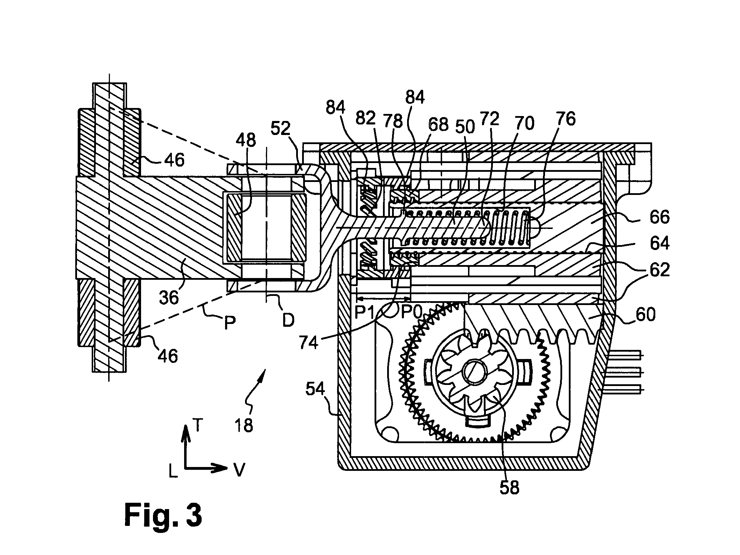

Comme représenté à la figure 3, la came 36 est ici formée par un coin 36 qui est monté mobile le long d'une course d'actionnement qui s'étend dans un plan transversal fixe, ledit plan transversal étant globalement parallèle au deuxième bras de levier. Dans les exemples représentés, le coin 36 est plus particulièrement monté coulissant le long d'une course rectiligne verticale qui s'étend parallèlement au deuxième bras de levier. Le coin 36 est ainsi monté coulissant entre :
- une position supérieure de repos dans laquelle la butée d'actionnement 12 est dans sa position arrière de repos ; et
- une position inférieure d'actionnement dans laquelle la butée d'actionnement 12 est dans sa position avant d'actionnement.

Le coin 36 présente une forme prismatique délimitée longitudinalement vers l'arrière par une face arrière 40 verticale transversale et vers l'avant par le chemin de came 38.

Le chemin de came 38 présente ici une pente plane qui est inclinée par rapport à un plan vertical transversal. L'inclinaison de la pente est telle que l'extrémité verticale inférieure du coin 36 est moins épaisse, dans le sens longitudinal, que son extrémité verticale supérieure.

Le glissement entre le point de sollicitation 34 et le chemin de came 38 est ici réalisé par roulement. A cet effet, le levier de commande 20 comporte un galet de roulement 42 qui est monté à rotation autour d'un axe transversal au niveau du point de sollicitation 34. Une portion périphérique du galet de roulement 42 est en saillie longitudinalement vers l'arrière par rapport au levier de commande 20 de manière à être directement en contact roulant sur le chemin de came 38. Le galet de roulement 42 forme ainsi le point de sollicitation 34 du levier de commande 20.

Le coin 36 est conçu et agencé de manière que le galet de roulement 42 soit en contact permanent avec le chemin de came 38 quelle que soit la position du coin 36 le long de sa course d'actionnement.

Pour permettre le débattement angulaire en roulis du levier de commande 20 autour de son axe principal "B", le galet de roulement 42 et le chemin de came 38 sont avantageusement conformés de manière à pouvoir rouler l'un sur l'autre dans une direction transversale. A cet effet, le galet de roulement 42 présente, en section dans un plan transversal, un contour bombé en forme de tonneau de manière à pouvoir rouler transversalement sur le plan du chemin de came 38. Ainsi, le galet de roulement 42 est susceptible de rouler transversalement sur le chemin de came 38 pour accompagner le pivotement en roulis du levier de commande 20.

Selon une variante non représentée de l'invention, le galet de roulement présente une section transversale rectangulaire, et le chemin de came présente un profil transversal qui est bombé. Ainsi, le galet de roulement est apte à rouler transversalement sur le chemin de came.

Selon une autre variante de l'invention, le galet de roulement et le chemin de came présentent tous les deux un profil bombé.

Le chemin de came 38 présente ici un profil vertical rectiligne de manière que le pivotement du levier de commande 20 soit linéairement proportionnel à la course de coulissement du coin 36.

Selon une variante non représentée de l'invention, le chemin de came présente un profil vertical muni d'une ou de plusieurs courbures, ou encore d'une succession de plans et de courbure.

De manière générale, il est possible de définir le profil vertical du chemin de came 38 en fonction de l'effort d'actionnement à appliquer sur le coin pour faire pivoter le levier de commande 20 et en fonction de la longueur de la course d'actionnement.

Selon une autre variante non représentée de l'invention, le chemin de came est muni de moyens de butée pour bloquer le coulissement du coin par rapport au levier de commande. Par exemple, le chemin de came comporte un tronçon de pente globalement longitudinal contre lequel le galet de roulement est susceptible de venir verticalement vers le bas en butée.

Selon encore une autre variante non représentée de l'invention, le chemin de came comporte un tronçon vertical qui permet de faire coulisser le coin sans agir sur la position angulaire du levier de commande.

Ces deux dernières variantes sont particulièrement avantageuses lorsqu'il existe un risque de collision entre le levier de commande et un autre élément du système d'embrayage.

Comme représenté à la figure 2, l'effort de rappel élastique "F1" est répercuté par le levier de commande 20 sur le coin 36 de manière perpendiculaire au chemin de came 38. Du fait de la pente formée par le chemin de came 38, l'effort de rappel élastique "F1" se divise en deux composantes. Une première composante verticale "F1 v" de l'effort de rappel élastique en projection sur un axe vertical agit sur le coin 36 pour le faire coulisser verticalement vers le haut. Une deuxième composante longitudinale "F11" de l'effort de rappel élastique "F1" en projection sur un axe longitudinal pousse le coin longitudinalement vers l'arrière.

Ce deuxième effort longitudinal "F11" est destiné à être transmis à un élément fixe. A cet effet, le coin 36 est en appui longitudinal vers l'arrière contre un fond 44 vertical transversal de réaction. Le fond 44 est fixe par rapport à la boîte de vitesses du véhicule automobile. Il est ici formé par une plaque qui est fixée au carter de la boîte de vitesses.

Le fond 44 est par exemple réalisé dans une tôle emboutie possédant des raidisseurs, ou en une pièce forgée ou en une pièce moulée.

Selon une variante non représentée de l'invention, le fond 44 est formé directement par une paroi verticale transversale de la boîte de vitesses du véhicule automobile.

Pour permettre le coulissement du coin 36 par rapport au fond 44, le coin 36 comporte des roulettes 46, 48, qui sont ici au nombre de trois comme cela est illustré à la figure 3. Le coin 36 est ainsi roulant sur le long d'une piste formée sur le fond 44. Avantageusement, le fond 44 est muni de rails de guidage longitudinaux (non représentés) qui bordent verticalement la piste de manière à empêcher le coin 36 de sortir de la piste.

Le contact entre les rails longitudinaux et le coin 36 peut être réalisé de manière frottante, par l'intermédiaire de patins, ou de manière roulante, par l'intermédiaire d'aiguilles tournantes.

Les trois roulettes 46, 48 sont agencées de manière à former un polygone "P" de sustentation qui s'étend dans un plan vertical. En projection longitudinale sur le fond 44, le chemin de came 38 est ici entièrement compris dans le polygone "P" de sustentation afin d'éviter que l'appui du levier de commande 20 sur le chemin de came 38 ne fasse basculer le coin 36.

Le coin 36 est plus particulièrement équipé de deux roulettes 46 inférieures latérales qui s'étendent transversalement en saillie depuis les faces longitudinales latérales du coin 36. Les deux roulettes 46 inférieures sont liées en rotation au coin 36 par l'intermédiaire d'un essieu transversal inférieur commun.

La roulette 48 supérieure présente une largeur transversale légèrement moins large que le chemin de came 38. La face arrière 40 du coin 36 présente un logement supérieur pour recevoir la roulette 48 supérieure à rotation autour d'un essieu transversal supérieur (non représenté). La roulette 48 supérieure est agencée au droit du chemin de came 38.

Selon une variante non représentée de l'invention, en projection longitudinale sur le fond, le chemin de came dépasse du polygone "P" de sustentation verticalement dans une direction ou dans les deux direction. Dans ce cas, pour éviter le basculement du coin, le bord d'extrémité avant des rails latéraux est bordé par une aile transversale en saillie en direction du coin 36 afin d'empêcher le basculement du coin. Les roulettes et les ailes sont agencées de manière que les roues inférieures soient susceptibles d'être en appui longitudinal vers l'avant contre les ailes pour empêcher le basculement du coin sans freiner le coulissement.

Comme représenté à la figure 3, le coin 36 est destiné à être poussé verticalement vers le bas par une tige verticale de poussée 50 à l'encontre de la composante verticale "F1v" de l'effort de rappel élastique "F1" du diaphragme. La tige de poussée 50 s'étend ainsi globalement parallèlement au deuxième bras de levier du levier de commande 20.

Le coin 36 est plus particulièrement monté pivotant autour d'un axe transversal "D" à l'extrémité inférieure libre de la tige de poussée 50. A cet effet, l'extrémité inférieure de la tige de poussée 50 est munie d'un attelage 52 en forme de "U" qui comporte deux flasques verticaux parallèles. L'extrémité supérieure du coin 36 est reçue entre les deux flasques sur lesquels le coin 36 est monté pivotant par l'intermédiaire de l'essieu supérieur.

Comme représenté aux figures 3 à 5, l'actionneur 18 comprend aussi un carter 54 portant un moteur électrique 56 dont l'arbre de sortie est relié par un réducteur 58 et une crémaillère 60 à un équipage mobile guidé en translation dans le carter 54 perpendiculairement à l'axe du moteur électrique 56, selon une direction verticale. Cet équipage mobile agit par l'intermédiaire de la tige de poussée 50 sur le coulissement du coin 36.

L'arbre de sortie du moteur électrique 56 est ainsi agencé perpendiculairement à l'axe de rotation "A" du système d'embrayage.

Du fait de la disposition verticale de la tige de poussée 50, le carter 54 et le moteur électrique 56 sont avantageusement éloignés verticalement de l'axe de rotation "A" du système d'embrayage. Cela permet de rapprocher longitudinalement la boîte de vitesses et le système d'embrayage.

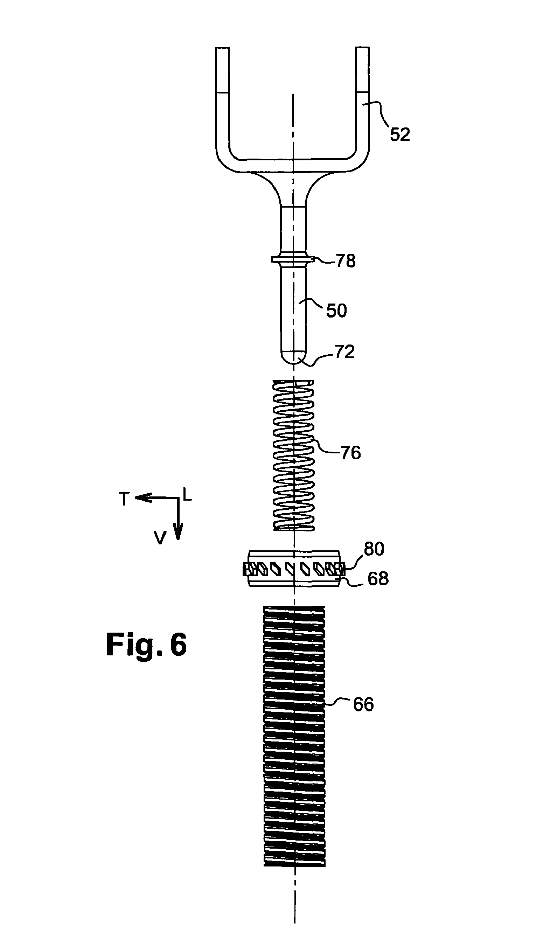

L'équipage mobile, que l'on voit mieux en figure 3 et 6, comprend essentiellement un coulisseau 62 entraîné par le moteur électrique 56 et relié à la tige de poussée 50 par des moyens de rattrapage de course qui permettent de compenser le déplacement axial de la tige de poussée 50 qui résulte de l'usure des garnitures de friction de l'embrayage.

Pour cela, le coulisseau 62 comporte un passage axial 64 dans lequel une vis 66 est guidée en translation et immobilisée en rotation, par exemple au moyen d'un méplat formé sur un côté de la vis 66 et guidé par une face plane correspondante du passage 64. La vis 66 est déplacée en translation dans le passage 64 au moyen d'un écrou 68 qui est vissé sur la vis 66. La rotation de l'écrou 68 est transformée par le filetage interne de l'écrou 68 en prise avec le filetage externe de la vis 66, en une translation axiale de la vis 66 à l'intérieur du coulisseau 62.

La vis 66 est de forme tubulaire et comporte un orifice 70 axial cylindrique débouchant du côté de la tige de poussée 50 et fermé à son extrémité opposée par un fond sur lequel s'appuie une tête de rotule 72 formée à l'extrémité supérieure de la tige de poussée 50.

La tige de poussée 50 est ici libre de coulisser verticalement vers le bas sans retenue par rapport à la vis 66. La tige de poussée 50 est maintenue verticalement en butée contre le fond de la vis 66 par la composante verticale "F1v" dirigée vers le haut de l'effort de rappel élastique "F1".

Dans cette configuration, une translation axiale de la vis 66 à l'intérieur du coulisseau 62 se traduit par une variation de la longueur apparente de la tige de poussée 50, permettant de compenser le décalage axial de cette tige de poussée 50 dû à l'usure des garnitures de friction de l'embrayage.

L'écrou 68 est ici agencé verticalement en butée contre une face 74 d'extrémité inférieure du coulisseau 62. L'écrou 68 est maintenu dans cette position de butée par l'intermédiaire d'un ressort hélicoïdal 76 qui est interposé verticalement entre un collet 78 de la tige de poussée 50 et le fond de 3a vis 66. Lorsque le coulisseau 62 est entraîné en coulissement vers le bas, le ressort hélicoïdal 76 est comprimé de manière à repousser la vis 66 verticalement vers le haut dans le coulisseau 62.

L'écrou 68 comporte une denture 80 externe formée de losanges répartis sur sa périphérie et qui est destinée à coopérer avec les dentures internes 82 de deux bagues 84 d'entraînement unidirectionnel qui sont montées à rotation limitée dans le carter 54 et qui sont immobilisées en translation axiale par rapport au carter 54.

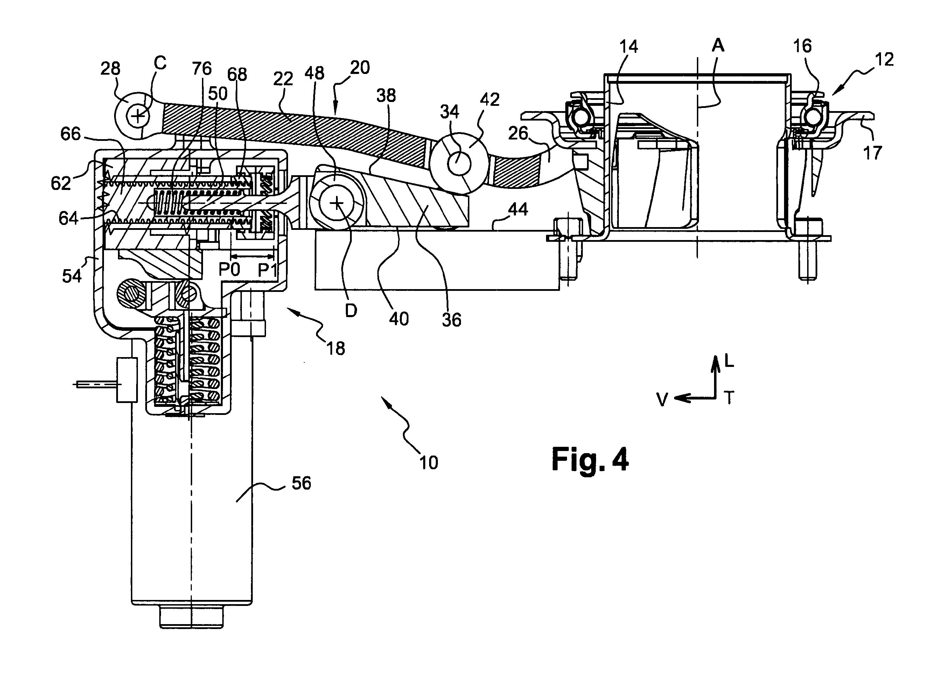

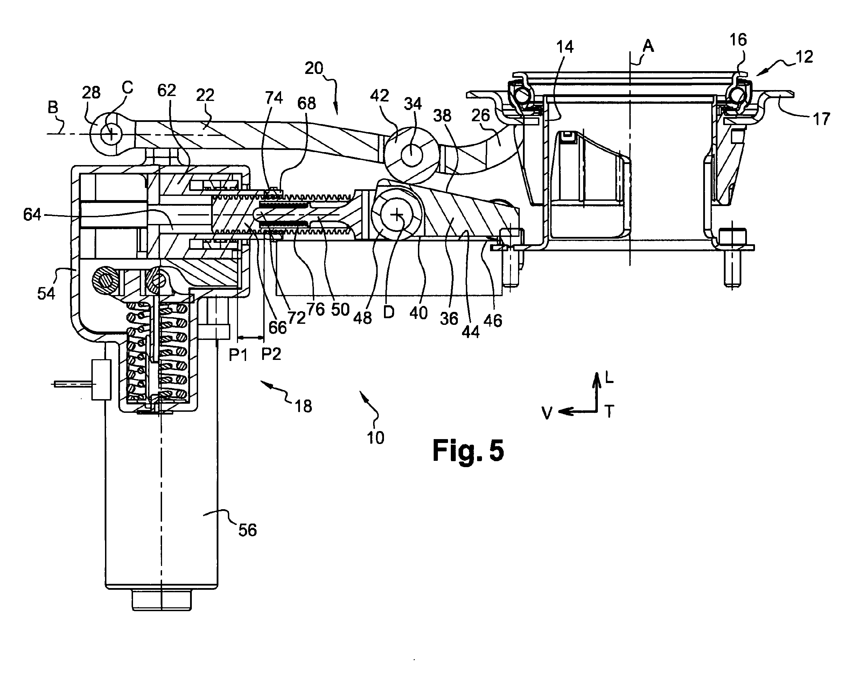

Le coulisseau 62 est susceptible de coulisser dans le carter 54 selon une course totale de coulissement qui est plus longue que la course d'actionnement du coin 36. La course totale de coulissement du coulisseau 62 comporte ainsi :
- une première course de réglage dans laquelle une face d'extrémité inférieure du coulisseau 62 est susceptible de se déplacer entre les positions "P0" et "P1" indiquées aux figures 3 et 4 ;
- une deuxième course d'actionnement dans laquelle la face d'extrémité inférieure du coulisseau 62 est susceptible de se déplacer entre les position "P1" et P2" indiquées à la figure 5.

La course d'actionnement "P1-P2" du coulisseau 62 correspond au déplacement de la tige de poussée 50 pour l'ouverture et la fermeture de l'embrayage. Le long de cette course, la tête rotulée 72 de la tige de poussée 50 est en appui au fond de la vis 66.

Dans la position "P1" du coulisseau 62, le coin 36 est dans sa position supérieure de repos dans laquelle il est en butée verticale contre le carter 54 de l'actionneur 18.

Lorsque le coulisseau 62 est déplacé verticalement vers le haut par le moteur électrique 56 le long de sa course de réglage "P1-PO", la tige de poussée 50 est retenue par le coin 36. Le fond de la vis 66 n'est alors plus en appui sur la tête de la tige de poussée 50. Les deux bagues 84 sont alors susceptibles d'être traversées axialement par l'écrou 68 Le passage de l'écrou 68 a travers l'une ou l'autre des bagues 84 provoque la rotation de l'écrou 68 d'un pas angulaire dans un sens ou dans l'autre, procurant ainsi un ajustement de la longueur apparente de la tige de poussée 50.

Un tel dispositif de rattrapage de course est déjà connu. Pour un fonctionnement détaillé d'un tel dispositif de rattrapage de jeu, on se reportera au document FR-A1-2.901.587, ou encore au document US-A1-2009/028.934.

Par ailleurs, comme cela est par exemple illustré à la figure 2, l'actionneur 18 selon l'invention est avantageusement du type à compensation d'effort et comprend, comme représenté en figure 2, un ressort de compression 86 agencé dans le carter 54 parallèlement au moteur électrique 56 et agissant, par l'intermédiaire d'un organe roulant 88, sur une rampe 90 inclinée ou curviligne portée par le coulisseau 62. La force appliquée par le ressort 56 au coulisseau 62 sollicite celui-ci dans le sens de l'actionnement du système d'embrayage, ce qui réduit d'autant le couple que le moteur électrique 56 doit fournir pour l'actionnement du système d'embrayage.

Lorsque le dispositif d'actionnement 10 est inactif, l'effort de rappel élastique "F1" du diaphragme pousse le point de sollicitation 34, c'est-à-dire le galet de roulement 42 du levier de commande 20, contre le chemin de came 38. Du fait de la pente du chemin de came 38, la composante verticale "F1v" de cet effort de rappel élastique "F1" pousse le coin 36 verticalement vers le haut en butée contre une face inférieure du carter 54 de l'actionneur 18. Le galet de roulement 42 est alors en contact avec une extrémité inférieure du chemin de came 38.

Puis, lorsque l'actionneur 18 est commandé de manière à actionner le système d'embrayage, le moteur électrique 56 applique au coulisseau un effort vertical d'actionnement orienté vers le bas. Le coulisseau 62 est entraîné par le moteur électrique 56 en coulissement vertical vers le bas le long de sa course d'actionnement. Le coulisseau 62 pousse alors la tige de poussée 50 et le coin 36. Le coin 36 roule contre le fond 44 et il pousse longitudinalement vers l'avant le galet de roulement 42 du levier de commande 20. Le galet de roulement 42 roule sur la pente du chemin de came 38, en provoquant le basculement du levier de commande 20 à l'encontre de l'effort de rappel élastique "F1" du diaphragme. La butée d'actionnement 12 est ainsi déplacée longitudinalement vers l'avant.

Du fait de la pente du chemin de came 38, la composante longitudinale "F1l" de l'effort de rappel élastique "F1" du diaphragme est transmise au fond 44, tandis que la composante verticale "F1v" exerce un effort de rappel de la tige de poussée 50 verticalement vers le haut.

Pour bloquer le coin 36 dans sa position actionnée, il est par exemple possible de commander le moteur électrique 56 pour appliquer un effort d'actionnement constant égal à la composante verticale "F1 v" de l'effort de rappel élastique "F1" de la tige de poussée 50.

Puis, lorsque le système d'embrayage est commandé vers sa position inactive, le moteur électrique 56 est désactivé. Le coin 36 est alors rappelé vers sa position supérieure de repos par la composante verticale "F1v" de l'effort de rappel élastique "F1" du diaphragme.

Selon une variante non représentée de l'invention, le coin est monté coulissant selon une direction transversale. Dans ce cas, la tige de poussée s'étend transversalement.

Selon une autre variante non représentée de l'invention, le coin est monté tournant autour d'un axe de rotation qui est orthogonal au deuxième bras de levier et qui est orthogonal à l'axe de pivotement. Dans la configuration de levier de commande décrit précédemment, le coin est monté pivotant autour d'un axe longitudinal. Le coin est par exemple porté par un secteur angulaire qui est monté pivotant contre le fond de l'actionneur. Dans ce cas, le chemin de came s'étend en arc de cercle.

Le dispositif d'actionnement conçu selon les enseignements de l'invention est avantageusement compact longitudinalement dans la zone du point de sollicitation du levier de commande.

Ce dispositif permet en outre de déporter le moteur électrique verticalement vers l'extérieur par rapport à l'axe de rotation "A" du système d'embrayage. Ceci permet notamment d'agencer le moteur électrique à l'extérieure d'une cloche qui contient le système d'embrayage. Les calories produites par le moteur électrique sont ainsi avantageusement dissipées à l'extérieure de cette cloche.

En outre, l'utilisation d'un coin pour faire pivoter le levier de commande permet de diminuer l'intensité de l'effort d'actionnement par rapport à l'utilisation d'une tige de poussée orthogonale au levier de commande. En effet, dans le cas de l'invention, seule la composante verticale de l'effort de rappel élastique du diaphragme doit être surmontée pour faire pivoter le levier de commande. Dans le cas d'une tige de poussée orthogonale, la totalité de l'effort de rappel élastique du diaphragme doit être surmontée.

Le dispositif d'actionnement réalisé selon les enseignements de l'invention peut aussi être appliqué à un double système d'embrayage comportant deux systèmes d'embrayages, parfois appelé "double embrayage". Dans un tel cas, chacun des deux systèmes d'embrayage est commandé par un dispositif d'actionnement associé qui est réalisé selon les enseignements de l'invention. Les deux butées d'actionnement sont ainsi agencées concentriquement l'une par rapport à l'autre, et les deux leviers de commande sont agencés longitudinalement l'un derrière l'autre. Les deux leviers de commande sont alors conformés et agencés de manière à permettre le pivotement indépendant de chaque levier de commande sans interférence entre eux. En outre, le premier levier de commande est décalé angulairement autour de l'axe de rotation "A" par rapport au deuxième levier de commande, ce qui permet de faciliter l'agencement de chacun des deux actionneurs.

## Revendications

1. Dispositif d'actionnement (10) pour un système d'embrayage à friction, notamment de véhicule automobile, qui comporte :
- une butée d'actionnement (12) qui est montée coulissante longitudinalement entre une position extrême avant d'actionnement du système d'embrayage et une position extrême arrière de repos du système d'embrayage vers laquelle elle est rappelée élastiquement, ladite butée d'actionnement étant formée par un palier à roulement ;
- un levier de commande (20) qui est monté pivotant, par l'intermédiaire d'une articulation fixe, autour d'un axe transversal de pivotement (C), le levier de commande (20) comportant :
- - un premier bras de levier de longueur fixe qui s'étend globalement verticalement depuis l'axe de pivotement (C) jusqu'à un point de poussée (30) de la butée d'actionnement (12) ;
- - un deuxième bras de levier de longueur fixe qui s'étend depuis l'axe de pivotement (C) jusqu'à un point de sollicitation (34) qui est décalé verticalement par rapport au point de poussée (30) ;
- un actionneur (18) qui est apte à appliquer un effort d'actionnement sur le point de sollicitation (34) du levier de commande (20) pour faire pivoter le levier de commande (20) et ainsi commander le coulissement de la butée d'actionnement (12) vers sa position extrême avant d'actionnement,
**caractérisé en ce que** l'actionneur (18) comporte une came (36) mobile présentant un chemin de came (38) qui est agencé en contact glissant avec le point de sollicitation (34) du levier de commande (20), le déplacement de la came (36) entraînant l'application de l'effort d'actionnement sur le point de sollicitation (34) formant suiveur de came.

2. Dispositif (10) selon la revendication précédente, **caractérisé en ce que** la came (36) est formée par un coin (36) qui est monté mobile le long d'une course d'actionnement qui s'étend dans un plan transversal fixe, ledit plan transversal étant globalement parallèle au deuxième bras de levier, le coin (36) étant monté coulissant entre :
- une position de repos correspondant à la position de repos de la butée d'actionnement ; et
- une position d'actionnement correspondant à la position d'actionnement de la butée d'actionnement.

3. Dispositif (10) selon la revendication précédente, **caractérisé en ce que** la course d'actionnement du coin (36) s'étend parallèlement au deuxième bras de levier.

4. Dispositif (10) selon la revendication précédente, **caractérisé en ce qu'**il comporte un fond (44) parallèle à la course d'actionnement du coin (36), le coin (36) prenant appui sur le fond (44) perpendiculairement par rapport à la direction de sa course d'actionnement et à l'encontre d'une partie (F1I) de la force de rappel de la butée d'actionnement (12) répercutée par le levier de commande (20).

5. Dispositif (10) selon la revendication précédente, caractérisé en que l'actionneur (18) comporte une tige de poussée (50) d'axe parallèle à la course d'actionnement du coin (36), la tige étant montée coulissante axialement pour pousser le coin (36) vers sa position d'actionnement.

6. Dispositif (10) selon la revendication précédente, **caractérisé en ce que** le chemin de came (38) présente une pente rectiligne.

7. Dispositif (10) selon la revendication 5, **caractérisé en ce que** le chemin de came (38) présente des courbures.

8. Dispositif (10) selon la revendication 2, **caractérisé en ce que** le coin (36) est monté tournant autour d'un axe de rotation qui est orthogonal au deuxième bras de levier et qui est orthogonal à l'axe de pivotement (C).

9. Dispositif (10) selon l'une quelconque des revendications précédentes, **caractérisé en ce que** le point de sollicitation (34) est formé par un galet de roulement (42) qui roule sur le chemin de came (38) lors du déplacement de la came mobile (36).

10. Dispositif (10) selon la revendication précédente, **caractérisé en ce que** l'articulation du levier de commande (20) est une liaison rotule qui autorise un pivotement en roulis du levier de commande (20) autour de l'axe principal du deuxième bras de levier, et **en ce que** le galet de roulement (42) et/ou le chemin de came (38) présente un profil bombé apte à autoriser le roulement transversal du galet de roulement (42) sur le chemin de came (38) pour accompagner le pivotement en roulis du levier de commande (20).

## Claims

1. Actuating device (10) for a friction clutch system, in particular for a motor vehicle, comprising:
- an activation stop (12) which is slidably mounted longitudinally between an extreme forward activation position of the clutch system and an extreme rearward rest position of the clutch system towards which it is resiliently returned, the said activation stop being formed by a rolling bearing;
- a control lever (20) pivotably mounted, via a fixed articulation, about a transverse pivot axis (C), the control lever (20) including:
- a first lever of fixed length which extends substantially vertically from the pivot axis (C) to a pushing point (30) of the activation stop (12);
- a second lever of fixed length which extends from the pivot axis (C) to a loading point (34) which is offset vertically in relation to the pushing point (30);
- an actuator (18) which is capable of applying an activation force on the loading point (34) of the control lever (20) to cause the control lever (20) to pivot and thereby control the sliding of the activation stop (12) towards its extreme forward activation position,
**characterised in that** the actuator (18) comprises a mobile cam (36) having a cam path (38) arranged in sliding contact with the loading point (34) of the control lever (20), the movement of the cam (36) causing the activation force to be applied on the loading point (34) forming a cam follower.

2. Device (10) according to the preceding claim, **characterised in that** the cam (36) is formed by a wedge (36) which is mounted movably along an activation travel extending in a fixed transverse plane, the said transverse plane being substantially parallel to the second lever, the wedge (36) being slidably mounted between:
- a rest position corresponding to the rest position of the activation stop; and
- an activation position corresponding to the activation position of the activation stop.

3. Device (10) according to the preceding claim, **characterised in that** the activation travel of the wedge (36) extends parallel to the second lever.

4. Device (10) according to the preceding claim, **characterised in that** it comprises a bottom (44) parallel to the activation travel of the wedge (36), the wedge (36) bearing on the bottom (44) perpendicularly to the direction of its activation travel and opposing a part (F1 L) of the return force of the activation stop (12) transmitted by the control lever (20).

5. Device (10) according to the preceding claim, **characterised in that** the actuator (18) includes a push rod (50) of axis parallel to the activation travel of the wedge (36), the rod being slidably mounted axially to push the wedge (36) towards its activation position.

6. Device (10) according to the preceding claim, **characterised in that** the cam path (38) has a rectilinear slope.

7. Device (10) according to claim 5, **characterised in that** the cam path (38) has curves.

8. Device (10) according to claim 2, **characterised in that** the wedge (36) is mounted rotatably about an axis of rotation which is orthogonal to the second lever and which is orthogonal to the pivot axis (C).

9. Device (10) according to any one of the preceding claims, **characterised in that** the loading point (34) is formed by a rolling bearing (42) which rolls on the cam path (38) during the movement of the mobile cam (36).

10. Device (10) according to the preceding claim, **characterised in that** the articulation of the control lever (20) is a ball joint which allows the control lever (20) to pivot with a roll action about the principal axis of the second lever, and **in that** the rolling bearing (42) and/or the cam path (38) has a domed profile designed to allow transverse rolling of the rolling bearing (42) on the cam path (38) to follow the pivoting with roll action of the control lever (20).

## Patentansprüche

1. Betätigungsvorrichtung (10) für ein Reibungskupplungssystem, insbesondere für Kraftfahrzeuge, welches umfasst:
- ein Betätigungslager (12), das in Längsrichtung zwischen einer vorderen Endposition der Betätigung des Kupplungssystems und einer hinteren Endposition des Ruhezustands des Kupplungssystems, in die es elastisch zurückgestellt wird, verschiebbar montiert ist, wobei das besagte Betätigungslager durch ein Wälzlager gebildet ist;
- einen Steuerhebel (20), der mittels eines festen Gelenks um eine quer verlaufende Schwenkachse (C) schwenkbar montiert ist, wobei der Steuerhebel (20) umfasst:
- - einen ersten Hebelarm mit fester Länge, der sich im wesentlichen vertikal von der Schwenkachse (C) aus bis zu einem Punkt (30) zum Drücken des Betätigungslagers (12) erstreckt;
- - einen zweiten Hebelarm mit fester Länge, der sich von der Schwenkachse (C) aus bis zu einem Beaufschlagungspunkt (34) erstreckt, welcher im Verhältnis zu dem Druckpunkt (30) vertikal versetzt ist;
- ein Stellorgan (18), das geeignet ist, eine Betätigungskraft auf den Beaufschlagungspunkt (34) des Steuerhebels (20) auszuüben, um den Steuerhebel (20) zum Schwenken zu bringen und auf diese Weise die Verschiebung des Betätigungslagers (12) in seine vordere Betätigungs-Endposition zu steuern,
**dadurch gekennzeichnet, dass** das Stellorgan (18) einen beweglichen Nocken (36) mit einer Nockenbahn (38) umfasst, welche in gleitendem Kontakt mit dem Beaufschlagungspunkt (34) des Steuerhebels (20) angeordnet ist, wobei die Verlagerung des Nockens (36) die Aufbringung der Betätigungskraft auf den einen Nockenfolger bildenden Beaufschlagungspunkt (34) herbeiführt.

2. Vorrichtung (10) nach dem vorherigen Anspruch, **dadurch gekennzeichnet, dass** der Nocken (36) durch einen Keil (36) gebildet ist, der entlang eines Betätigungsweges beweglich montiert ist, welcher sich in einer festen Querebene erstreckt, wobei die besagte Querebene im wesentlichen parallel zum zweiten Hebelarm ist, wobei der Keil (36) verschiebbar ist zwischen:
- einer Ruheposition, die der Ruheposition des Betätigungslagers entspricht; und
- einer Betätigungsposition, die der Betätigungsposition des Betätigungslagers entspricht.

3. Vorrichtung (10) nach dem vorherigen Anspruch, **dadurch gekennzeichnet, dass** der Betätigungsweg des Keils (36) sich parallel zum zweiten Hebelarm erstreckt.

4. Vorrichtung (10) nach dem vorherigen Anspruch, **dadurch gekennzeichnet, dass** sie einen zum Betätigungsweg des Keils (36) parallelen Boden (44) umfasst, wobei der Keil (36) sich senkrecht zu der Richtung seines Betätigungsweges und entgegen eines Teils (F1I) der von dem Steuerhebel (20) weitergegebenen Rückstellkraft des Betätigungslagers (12) abstützt.

5. Vorrichtung (10) nach dem vorherigen Anspruch, **dadurch gekennzeichnet, dass** das Stellorgan (18) einen Druckstößel (50) mit zum Betätigungsweg des Keils (36) paralleler Achse umfasst, wobei der Stößel axial verschiebbar montiert ist, um den Keil (36) in seine Betätigungsposition zu drücken.

6. Vorrichtung (10) nach dem vorherigen Anspruch, **dadurch gekennzeichnet, dass** die Nockenbahn (38) eine geradlinige Neigung aufweist.

7. Vorrichtung (10) nach Anspruch 5, **dadurch gekennzeichnet, dass** die Nockenbahn (38) Krümmungen aufweist.

8. Vorrichtung (10) nach Anspruch 2, **dadurch gekennzeichnet, dass** der Keil (36) drehend um eine Rotationsachse montiert ist, die orthogonal zum zweiten Hebelarm ist und die orthogonal zur Schwenkachse (C) ist.

9. Vorrichtung (10) nach einem der vorherigen Ansprüche, **dadurch gekennzeichnet, dass** der Beaufschlagungspunkt (34) durch eine Laufrolle (42) gebildet ist, die bei der Verlagerung des beweglichen Nockens (36) auf der Nockenbahn (38) abrollt.

10. Vorrichtung (10) nach dem vorherigen Anspruch, **dadurch gekennzeichnet, dass** das Gelenk des Steuerhebels (20) eine Kugelkopf-Verbindung ist, die ein schlingerndes Schwenken des Steuerhebels (20) um die Hauptachse des zweiten Hebelarms erlaubt, und dass die Laufrolle (42) und/oder die Nockenbahn (38) ein gewölbtes Profil aufweisen, das geeignet ist, das Querrollen der Laufrolle (42) auf der Nockenbahn (38) zu erlauben, um die schlingernde Schwenkbewegung des Steuerhebels (20) zu begleiten.
